# EUROPÄISCHE PATENTSCHRIFT

(11) **EP 1 772 247 B1**
(45) Veröffentlichungstag und Bekanntmachung des Hinweises auf die Patenterteilung: **08.04.2009**
(21) Anmeldenummer: 06120713.0
(22) Anmeldetag: 15.09.2006
(51) Int. Cl.: B29C 41/08

(54) **Verfahren zur Herstellung von Kunststoff-Formhäuten**
Method for manufacturing plastic skins
Procédé pour la fabrication d'une peau en matière plastique

(30) Priorität: 05.10.2005 DE 102005047775
(43) Veröffentlichungstag der Anmeldung: 11.04.2007
(73) Patentinhaber: Benecke-Kaliko AG, 30419 Hannover (DE)
(72) Erfinder: André, Walter, 29699 Bomlitz (DE); Heidkamp, Michael, 29386 Dedelstorf (DE); Popovic, Gnjatija, 31224 Peine (DE)
(74) Vertreter: Finger, Karsten

(56) Entgegenhaltungen:
- EP-A- 0 972 625
- WO-A-20/06060970
- WO-A-20/06131154
- DE-A1- 4 215 914
- DE-A1- 19 713 233
- GB-A- 1 420 867
- JP-A- 2 253 906
- JP-A- 6 320 101
- JP-A- 11 268 054
- JP-A- 11 348 057
- US-A- 4 349 601
- US-A- 5 370 831

## Beschreibung

Die Erfindung betrifft ein Verfahren zur Herstellung von Kunststoff-Formhäuten, insbesondere für Kraftfahrzeugteile wie z.B. Armaturenbretter und Türverkleidungen, wobei die Kunststoff-Formhäute im Sinterverfahren durch ein Anschmelzen von thermoplastischem Kunststoffpulver an einer Oberfläche eines erwärmten Formwerkzeuges aufgebaut werden.

Die Herstellung so genannter Slushhäute beschreibt beispielsweise die EP 0 972 625 A1 anhand der dort offenbarten Einrichtung, nämlich einer Werkzeugform zur Herstellung von - in diesem Falle - zweifarbigen Kunststoff-Formhäuten für Kraftfahrzeugteile, d.h. im Wesentlichen Armaturenbretter, Türverkleidungen etc. Das hier angewandte Herstellungsverfahren zur Erzeugung von Sinterfolien / Slushhäuten ist ein Rotationssintern, bei dem sich ein Kunststoffpulver in der rotierenden Werkzeugform befindet und an entsprechend geheizten Wandteilen der Werkzeugform anschmilzt.

Die hier gezeigte Einrichtung weist ein Formwerkzeug auf, welches aus einem wechselbaren unteren Werkzeugkasten und einer oberen Werkzeugform besteht. Die unteren Teile der Werkzeugkästen, welche jeweils auch das Pulverbett beinhalten, sind lösbar angeordnet in Bezug auf die obere Werkzeugform, an welche das Kunststoffpulver anschmilzt. Für die Herstellung von Kunststoff-Formhäuten müssen nun die verbundenen Werkzeugteile, d.h. Werkzeugkasten und Werkzeugform um eine Rotationsachse gedreht werden, damit das Kunststoffpulver beim Rotationssintern an der Werkzeugform anschmilzt. Abgesehen von dem erheblichen Aufwand, einen mit Kunststoffpulver gefüllten Kasten, das so genannte "Bucket" mit rotieren zu lassen, damit das Pulver über die Innenoberfläche des geheizten oberen Werkzeugformkastens rieselt, gestaltet das Einstellen einer gleichmäßigen Werkstückdicke / Formhautdicke ausgesprochen schwierig.

Die DE 197 13 233 A1 offenbart ein Verfahren zur Herstellung flächiger Kunststoffschichten, bei dem ein elektrisch leitfähiger und z.B. induktiv erwärmter Reaktionsbehälter eine nach unter gerichtete Öffnung aufweist, in die ein Kunststoffgranulat oder -pulver eingeblasen wird. Da das überschüssige Pulver durch die Schwerkraft wieder aus der Öffnung fällt, bedarf es bei diesem Verfahren einer aufwendigen Kapselung gegenüber der Umgebung, insbesondere auch unter dem Aspekt, explosionsfähige Pulvergemische zu vermeiden.

Die DE 42 15 914 A1 offenbart ein Verfahren zum Herstellen von räumlich geformten Kunststoffhäuten bei elektrostatischem Auftrag des Kunststoffpulvers auf ein dünnwandiges Formwerkzeug mit niedriger Wärmespeicherkapazität. Hierdurch soll mit leichten, konstruktiv einfachen und flexiblen Werkzeugformen eine gleichmäßige Schichtdicke erreicht werden.

Die WO 2006/060970 A1 offenbart ein Verfahren zur Herstellung einer Elastomer-Haut, bei dem auf eine vorgeheizte Oberfläche ein Kunststoffpulver aufgesprüht wird, wonach das Werkzeug abgekühlt wird.

Die WO 2006/131154 A1 offenbart ein Verfahren und eine Vorrichtung zur Herstellung von Slush-Häuten durch Sprühen oder Aufschleudem eines Kunststoffpulvers auf eine beheizbare Form. Auch hier soll die Verwendung aufwendig konstruierter Werkzeugformen und Dreheinrichtungen vermieden werden.

Die US 5,370,831 offenbart ein Verfahren zur Herstellung von Polymerhäuten für die Innenverkleidung von Fahrzeugen, bei dem in mehreren Schritten, auch unter Anwendung von Masken, Kunststoffmaterial auf eine vorgeheizte Werkstückoberfläche geschleudert wird.

Die drei wesentlichen im Stand der Technik bekannten Verfahren sind also das Pulver-Slush - Verfahren, bei welchem ein Kunststoffpulver Pulver in eine heiße offene Form geschüttet und durch Rotation und Energieeintrag eine möglichst gleichmäßig dicke Formhaut erzeugt wird. Nachteilig ist - wie bereits oben dargestellt - hier der Einfluss der Gravität, wodurch eine Gleichmäßigkeit der Hautdicke nur bedingt und ein gezieltes Steuern der Hautdicke nur eingeschränkt möglich ist.

Daneben existiert das Polyurethan (PU) - Sprühverfahren, bei dem die beiden flüssigen Polyurethan- Komponenten in eine temperierte offene Form gesprüht werden und dort reagieren. Durch Rotation wird dann die Formhaut erzeugt. Auch hier entstehen die bereits beim Pulver-Slush-Verfahren geschilderten Nachteile, allerdings, da die PU - Komponenten flüssig sind und daher deutlich viskoser, in stärker ausgeprägter Form.

Letztlich ist auch das Gießhaut- Verfahren bekannt, bei welchem die beiden flüssigen Polyurethan- Komponenten in eine temperierte geschlossene Form gespritzt wird. Das Gießhaut-Verfahren weist gegenüber den anderen Verfahren den Vorteil auf, dass die Hautdicke relativ genau gefertigt werden kann. Allerdings weist dieses Verfahren den Nachteil auf, dass die Werkzeugkosten relativ hoch und die Werkzeuge selbst schwierig abzustimmen sind.

Der Erfindung lag also die Aufgabe zugrunde, ein Verfahren zur Herstellung von Kunststoff-Formhäuten mittels Pulversintern bereitzustellen, mit dem eine genaue Einstellung der Wanddicken der Formhäute erfolgen kann, ohne Materialanhäufungen oder -schwächungen zu befürchten, mit dem eine aufwendige Apparatur für das Handling des Pulvers (Pulverkasten; Dockstation etc.) bis zum Eintrag in das Werkzeug entfällt, und mit dem eine Minimierung der Herstellkosten erreicht werden kann.

Gelöst wir diese Aufgabe durch die Merkmale des Hauptanspruchs. Eine vorteilhafte Weiterbildung ist in dem Unteransprüch erfasst.

Hierbei wird das Formwerkzeug erwärmt und das thermoplastische Kunststoffpulver mit Hilfe einer Sprüheinrichtung in das Formwerkzeug eingesprüht wird. Während das Einsprühen von flüssigen Komponenten bereits bekannt ist, bestanden gegen das Einsprühen von pulverförmigen Kunststoffen bisher Vorurteile in der Fachwelt, obwohl durch das Einsprühen der große Vorteil erreicht wird, dass der zur Berieselung nach dem Slush-Verfahren erforderliche und schwer zu handhabende Pulverkasten (Bucket) unnötig wird. Eine aufwendige Apparatur für das Handling des Pulvers ( Pulverkasten; Dockstation etc.) bis zum Eintrag in das Werkzeug kann also entfallen.

Dabei wird das Kunststoffpulver über eine Düse und mit Hilfe von Druckluft in das erwärmte Formwerkzeug gesprüht, wobei dass das Kunststoffpulver statisch aufgeladen und zwischen Sprüheinrichtung und Formwerkzeug ein elektrisches Potential angelegt wird. Diese Ausbildung ist vorteilhaft für den gezielten und gleichmäßigen Auftrag des Pulvers in der Form und kommt damit der Produktqualität zugute. Durch das gezielt Einbringen des Pulver in die Form mit Hilfe der statischen Aufladung kann die Hautdicke auch regional begrenzt unterschiedlich stark ausgeführt werden. Dies hat einen optimalen Einsatz des Pulver zur Folge. Das Pulver kann über ein Leitungssystem an die Maschine gebracht werden und Pulververluste werden minimiert.

Durch den Entfall der Pulverkästen werden auch Dichtbereiche der Formhaut überflüssig, d.h. die erforderliche Hautfläche wird kleiner und das Fertigteil wird billiger

Während und/oder nach dem Einsprühen des Kunststoffpulvers das Formwerkzeug wird letzteres in eine Rotation versetzt. Die Einbindung des Werkzeuges in eine solche Rotations- Sintermaschine hat sich als vorteilhaft erwiesen, da durch diesen Sinterprozess die Produktqualität im Hinblick auf die Wanddickentoleranzen weiter verbessert werden kann.

Nach dem Einsprühen erfolgt ein weiterer Energieeintrag zur Erwärmung des Formwerkzeuges durch ein Ölaufheizverfahren bzw. Ölumlaufverfahren. Durch die hohe Wärmekapazität des Öles kann die Werkzeugtemperatur auf hohem Niveau konstant gehalten und anschließend weiter aufgeheizt oder auch relativ schnell abgekühlt werden.

Eine weitere vorteilhafte Ausbildung des Verfahrens besteht darin, dass mindestens einer der Bereiche der Oberfläche des Formwerkzeuges während eines ersten Einsprühens von Kunststoffpulver einer Farbe mit einer Abdeckung oder Maske versehen wird, die nach dem ersten Einsprühen entnommen wird, wonach mindestens ein weiteres Einsprühen des Formwerkzeuges mit Kunststoffpulver einer anderen Farbe erfolgt. Hierdurch lässt sich auf einfache Weise das erfindungsgemäße Sprühverfahren auch zur Herstellung mehrfarbiger Kunststoff-Formhäute nutzen.

## Patentansprüche

1. Verfahren zur Herstellung von Kunststoff-Formhäuten, insbesondere für Kraftfahrzeugteile wie z.B. Armaturenbretter und Türverkleidungen, wobei die Kunststoff-Formhäute im Sinterverfahren durch ein Anschmelzen von thermoplastischem Kunststoffpulver an einer Oberfläche eines erwärmten Formwerkzeuges aufgebaut werden, wobei das Formwerkzeug erwärmt wird und das thermoplastische Kunststoffpulver mit Hilfe einer Sprüheinrichtung über eine Düse und mit Hilfe von Druckluft in das erwärmte Formwerkzeug gesprüht wird, wobei das Kunststoffpulver statisch aufgeladen und zwischen Sprüheinrichtung und Formwerkzeug ein elektrisches Potential angelegt wird, **dadurch gekennzeichnet, dass** während und/oder nach dem Einsprühen des Kunststoffpulvers das Formwerkzeug in eine Rotation versetzt wird und dass nach dem Einsprühen ein weiterer Energieeintrag zur Erwärmung des Formwerkzeuges durch ein Ölaufheizverfahren bzw. Ölumlaufverfahren erfolgt.

2. Verfahren nach Anspruch 1 zur Herstellung mehrfarbiger Kunststoff-Formhäute, **dadurch gekennzeichnet, dass** mindestens einer der Bereiche der Oberfläche des Formwerkzeuges während eines ersten Einsprühens von Kunststoffpulver einer Farbe mit einer Abdeckung oder Maske versehen wird, die nach dem ersten Einsprühen entnommen wird, wonach mindestens ein weiteres Einsprühen des Formwerkzeuges mit Kunststoffpulver einer anderen Farbe erfolgt.

## Claims

1. Method for manufacturing plastic moulded skins, in particular for parts of a motor vehicle, such as for example dashboards and door trim, the plastic moulded skins being built up in a sintering process by making powder of a thermoplastic polymer begin to melt on the surface of a heated mould, the mould being heated and the powder of the thermoplastic polymer being sprayed into the heated mould by means of a spraying device, via a nozzle, and by means of compressed air, the polymer powder being statically charged and an electric potential applied between the spraying device and the mould, **characterized in that,** during and/or after the spraying in of the polymer powder, the mould is set in rotation and, after the spraying in, further energy for heating the mould is introduced by an oil heating process or an oil circulating process.

2. Method according to Claim 1 for manufacturing multicoloured plastic moulded skins, **characterized in that** at least one of the regions of the surface of the mould is provided with a covering or mask during a first spraying in of polymer powder of one colour and said covering or mask is removed after the first spraying in, after which at least one further polymer powder of a different colour is sprayed into the mould.

## Revendications

1. Procédé de fabrication de peaux moulées en matière synthétique, en particulier pour des pièces de véhicules automobiles, par exemple le tableau de bord et les habillages de portes, dans lequel les peaux en matière synthétique sont formées dans une opération de frittage par fusion d'une poudre de matière synthétique thermoplastique à la surface d'un outil de moulage chauffé, l'outil de moulage étant chauffé et la poudre de matière synthétique thermoplastique étant projetée dans l'outil de moulage chaud à l'aide d'un dispositif de projection, par une tuyère et à l'aide d'air sous pression,
la poudre de matière synthétique étant chargée statiquement et un potentiel électrique étant appliqué entre le dispositif de projection et l'outil de moulage,
**caractérisé en ce que**
pendant et/ou après la projection de la poudre de matière synthétique, l'outil de moulage est mis en rotation et
**en ce qu'**après la projection, on apporte encore de l'énergie par une opération de chauffage à huile ou une opération de recirculation d'huile, pour chauffer l'outil de moulage.

2. Procédé selon la revendication 1, pour la fabrication de peaux moulées en matières synthétiques de plusieurs couleurs, **caractérisé en ce que** pendant une première projection de poudre de matière synthétique d'une couleur, au moins l'une des parties de la surface de l'outil de moulage est dotée d'un recouvrement ou d'un masque qui sont enlevés après la première projection, suite à quoi on réalise au moins une autre projection de poudre de matière synthétique d'une autre couleur dans l'outil de moulage.
